# EUROPEAN PATENT SPECIFICATION

(11) **EP 1 657 123 B1**
(45) Date of publication and mention of the grant of the patent: **28.05.2008**
(21) Application number: 05021295.0
(22) Date of filing: 29.09.2005
(51) Int. Cl.: B60R 21/16

(54) **Airbag apparatus**
Airbaganordnung
Dispositif d'airbag

(30) Priority: 16.11.2004 JP 2004331933; 16.11.2004 JP 2004331954
(43) Date of publication of application: 17.05.2006
(73) Proprietor: TAKATA CORPORATION, Minato-ku, Tokyo 106-8510 (JP)
(72) Inventor: Kurimoto, Takeshi, Minato-ku Tokyo 106-8510 (JP); Takedomi, Akifumi, Minato-ku Tokyo 106-8510 (JP); Hiraoka, Kenji, Minato-ku Tokyo 106-8510 (JP)
(74) Representative: Vossius & Partner

(56) References cited:
- EP-A- 0 523 704
- EP-A- 0 940 302
- EP-A- 1 586 489
- US-A- 5 647 609
- US-A1- 2006 001 244

## Description

The present invention relates to an airbag apparatus to be mounted to a vehicle such as a motor vehicle and, more specifically, to a development technology of an airbag apparatus which is deployed and inflated in a passenger protection area between a vehicle passenger and a vehicle side wall portion for protecting the head portion and the breast portion of the vehicle passenger in case of vehicle accident such as side collision or sideward rolling of the vehicle.

In the related art, there are proposed various types of airbag apparatus for protecting the head portion and the breast portion of a vehicle passenger from crashing a vehicle side wall portion such as a side window or a door in case of vehicle accident such as side collision or sideward rolling of a vehicle. For example, Patent Document 1 shown below discloses an airbag apparatus provided with two internal spaces, that is, a lower chamber for protecting the breast portion of the vehicle passenger and an upper chamber being communicated with the lower chamber for protecting the breast portion of the vehicle passenger in the- airbag. The airbag apparatus disclosed in JP-A-10-297409 is configured in such a manner that the airbag is deployed and inflated entirely by supplying gas for deployment and inflation supplied from an inflator upon occurrence of vehicle accident first to the lower chamber on an upstream side of gas flow, and after having flowed in the lower chamber, supplying the gas to the upper chamber on a downstream side of gas flow.

EP-A-0 523 704 which discloses the features of the preamble of claim 1, relates to an inflatable protective system providing cushioning for an occupant of a vehicle during side impact of the vehicle by another object. The system includes an inflatable bag that is attached to a mounting plate, which extends over the lower section of a side panel assembly of the vehicle. The inflatable bag includes an upper portion foldable into a stowed position facing the occupant's thorax when seated on the seat. A deployment envelope is sandwiched between the bag and a cushioning panel, which is detachably connected to an inner side of the side panel assembly, to enhance the smooth deployment of the bag. An inflator inflates the lower portion of the bag, which expands laterally toward the occupant. The entire cushioning panel is propelled across the lateral spacing between the side panel assembly and the seat toward the occupant. The lateral expansion of the lower portion of the bag opens accordion-like pleats folded in the upper portion of the bag and permits the upper and lower bag portions to simultaneously reach their fully inflated positions.

US 5,647,609 relates to an inflatable restraint cushion for restraining a vehicle occupant which is used in a vehicle having a vehicle side structure including a door having a beltline portion defining a lower boundary of a side window opening. The cushion includes an inboard contact face for inflation adjacent the vehicle occupant and an opposite outboard contact face for inflation adjacent the vehicle door. The outboard contact face includes a generally horizontally extending beltline notch portion shaped for matably aligning with and engaging the beltline portion of the door when the cushion is inflated. Upon engagement of the cushion by the occupant, the beltline notch portion of the cushion reacts against and is laterally and vertically supported by the beltline portion of the door to provide lateral stability to the cushion.

In the airbag apparatus of this type intended for protecting the head portion and the breast portion of the vehicle passenger in case of vehicle accident, it is highly required to ensure protection of the vehicle passenger by deploying and inflating the airbag in an optimal mode corresponding to the respective objective portions of the vehicle passenger.

In view of such points, it is an object of the present invention to provide a development technology of the airbag apparatus which can ensure protection of the head portion and the breast portion of the vehicle passenger in case of vehicle accident.

The present invention is intended to solve the above-described problems. The present invention is a technology which can be applied to develop the airbag apparatus which provides effective protection of at least the head portion and the breast portion of the vehicle passenger by the airbag, in various types of vehicles, more typically in motor vehicles.

A first aspect of the present invention for solving the above-described problems is an airbag apparatus as stated in Claim 1.

The airbag apparatus stated in Claim 1 includes at least an airbag and a gas supply means. The airbag is adapted to be deployed and inflated in a passenger protection area between a vehicle passenger and a vehicle side wall portion in case of vehicle accident. Gas for deployment and inflation is supplied to the airbag via the gas supply means having gas generating function. The term "vehicle side wall portion" in this specification widely includes a vehicle structure disposed like a wall surface on the (right or left) sides of the vehicle passenger, and typically, the vehicle side wall portion is constituted by a side window or a door trim or the like.

In particular, the airbag of the present invention includes at least a head chamber for protecting a head portion of the vehicle passenger, and a breast chamber for protecting a breast portion of the vehicle passenger. The respective chambers are formed into compartments defined by partitioning an internal space in the airbag. The present invention includes a structure in which only the space areas of the head chamber and the breast chamber are formed in the airbag, or a structure in which a space area other than the head chamber and the breast chamber is formed in the airbag in addition to the head chamber and the breast chamber. The airbag is configured in such a manner that a thickness of the head chamber in the lateral direction is larger than the thickness of the breast chamber in the lateral direction at a time of deployment and inflation. The thickness of the respective chambers is defined as a length of the chamber disposed in a passenger protection area between the vehicle passenger and the vehicle side wall portion in the lateral direction. The term "the lateral direction" in the present invention corresponds to a normal vector direction of a passenger protection surface of the airbag facing to the vehicle passenger in a deployed and inflated state. The term "at the time of deployment and inflation'' in the present invention includes timing from a beginning of deployment and inflation process upon completion of inflation when the passenger is constrained.

In this arrangement, the head portion of the vehicle passenger is protected by the head chamber which is relatively large in thickness with respect to the respective portions of the airbag at the time of deployment and inflation, and the breast portion of the vehicle passenger is protected by the breast chamber which is relatively small in thickness at the time of deployment and inflation. Accordingly, the airbag can be deployed and inflated in an optimal mode corresponding to the respective portions to be protected of the vehicle passenger, whereby protection of the vehicle passenger can be ensured.

A second aspect of the present invention to solve the above-described problems is an airbag apparatus as stated in Claim 2.

According to the airbag apparatus stated in Claim 2, the airbag stated in Claim 1 includes a seam in which the wall surfaces of airbag panels opposing each other are directly stitched together in at least one of the head chamber and the breast chamber. Then, the thickness of the chambers in the lateral direction at the time of deployment and inflation is adjusted by stitching at the seam. This structure includes a mode in which the relative thickness of the chambers is adjusted by the stitching at the seam in either one of the head chamber or the breast chamber, and a mode in which the relative thickness of the chambers is adjusted by the stitching of the seam in both of the head chamber and the breast chamber.

In this arrangement, since the thicknesses of the chambers in the lateral direction of the head chamber and the breast chamber are adjusted by the stitching at the seam, an adjustment structure of the thickness of the chambers is simplified.

A third aspect of the invention for solving the above-described problems is an airbag apparatus as stated in Claim 3.

According to the airbag apparatus stated in Claim 3, in the airbag stated in Claim 1 or Claim 2 a gas sealing agent is applied on the inner wall surfaces for restricting gas in the head chamber from flowing out of the chamber. A typical application mode of the "gas sealing agent" in this specification includes, with regard to the head chamber, a first mode in which a coating layer is formed entirely on the inner wall surfaces of the airbag panels, a second mode in which the sealing agent is applied along the seam in which the airbag panels are stitched together, and a third mode in which the first mode and the second mode are combined. Transmission of gas through the airbag panels in themselves is prevented by the first mode, and transmission of gas through the seam between the airbag panels is prevented by the second mode, and in particular, the both of the transmission of gas through the airbag panels in themselves and the transmission of gas through the seam are prevented by the third mode, whereby improvement of air-tightness is achieved with higher effectiveness by the cooperation of these modes.

In this arrangement, by enhancing the air-tightness specifically in the head chamber out of the respective portions of the airbag by the use of the gas sealing agent, a high-pressure state in the head chamber after having deployed and inflated can be maintained, and particularly protection of the head portion of the vehicle passenger is ensured.

A fourth aspect of the present invention for solving the above-described problems is an airbag apparatus as stated in Claim 4.

According to the airbag apparatus as stated in Claim 4, the airbag stated any one of Claim 1 to Claim 3 is provided with a vent hole formed on the airbag panel for allowing gas in the breast chamber to be discharged out of the chamber. Therefore, the gas flowing into the breast chamber at the time of deployment and inflation of the airbag is discharged through this vent hole. The size of the vent hole is determined as needed based on the desired mode of deployment and inflation of the breast chamber, for example, the period of gas retention or the gas pressure.

In this arrangement, the vent hole can prevent the internal pressure in the breast chamber from excessively increased or the high-pressure state in the breast chamber from being excessively and continuously maintained, whereby particularly protection of the breast portion of the vehicle passenger is ensured.

As described above, according to the present invention, with the configuration such that the thickness of the head chamber in the lateral direction of the deployed and inflated airbag is larger than the thickness of the breast chamber in the lateral direction in case of vehicle accident, the airbag can be deployed and inflated in the optimal mode corresponding to the respective portion to be protected of the vehicle passenger, whereby the protection of the vehicle passenger in case of the vehicle accident is ensured.

Fig. 1 is a drawing showing a structure of an airbag apparatus 101 according to the present embodiment, in which a side view of a deployed and inflated airbag 102 is shown;
Fig. 2 is a perspective view showing a structure of a gas supply device 130 in Fig. 1;
Fig. 3 is a side view of the airbag 102 deployed and inflated for a vehicle passenger C seated on a driver's seat S; and
Fig. 4 is a front view of the airbag 102 deployed and inflated for the vehicle passenger C seated on the driver's seat S.

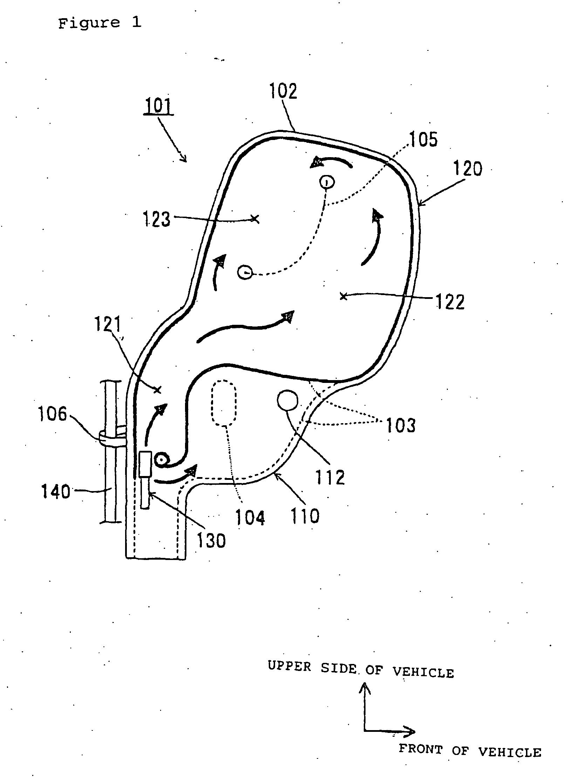

Referring now to Fig. 1 to Fig. 4, an airbag apparatus 101 according to an embodiment of the "airbag apparatus" of the present invention will be described. The airbag apparatus 101 of the present embodiment is the airbag apparatus to be mounted corresponding to a vehicle passenger seated on a driver's seat in a motor vehicle having a steering handle on the right side.

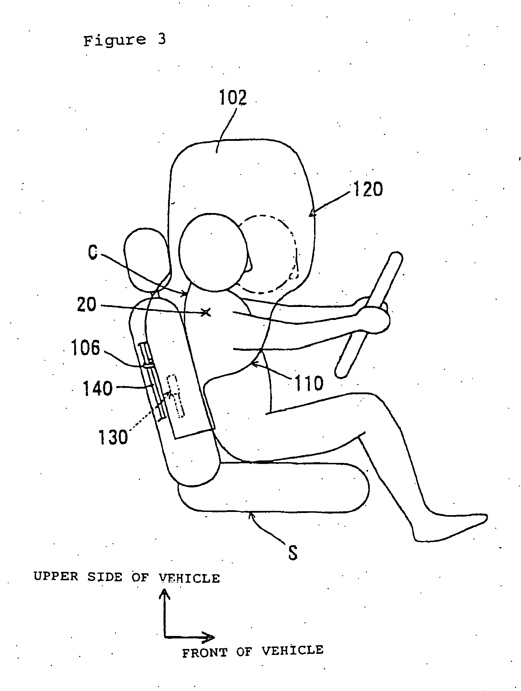

Fig. 1 is a drawing showing a structure of the airbag apparatus 101 according to the present embodiment, in which a side view of a deployed and inflated airbag 102 is shown. As shown in Fig. 1, the airbag apparatus 101 is mainly composed of the airbag 102 and a gas supply device 130. In the present embodiment, the airbag apparatus 101 is built in a side portion of a passenger seat (a driver's seat S in Fig. 3). In Fig. 1, the airbag 102 is arranged so that the right side in the drawing is directed toward the front of the vehicle and the upper side in the drawing is directed upwardly of the vehicle.

The airbag 102 includes a breast chamber 110 disposed on a lower side of the vehicle so as to protect a breast portion of the vehicle passenger, and a head chamber 120 disposed on the upper side of the vehicle so as to protect a head portion of the vehicle passenger. The breast chamber 110 corresponds to the "breast chamber" in the present invention, and the head chamber 120 corresponds to the "head chamber" in the present invention. The breast chamber 110 and the head chamber 120 are partitioned from each other by stitching wall surfaces of opposing airbag panels directly together at seams 103.. In the present embodiment, the capacity of the head chamber 120 is relatively larger than the capacity of the breast chamber 110. A portion shown by a thick solid line among respective members of the seams 103 in the drawing is a gas sealing agent applied portion on which the gas sealing agent (for example, a sealing agent using silicon material) is applied, whereby the gas sealing agent functions to prevent movement of gas between an interior and an exterior of the head chamber 120 and enhance the air-tightness in the head chamber 120. A coating layer is formed at least on the entire surface of an inner wall surface of the head chamber 120 among the respective chambers, and the coating layer functions to prevent movement of gas between the interior and the exterior of the head chamber 120 and enhance the gas air-tightness in the head chamber 120.

In this manner, in the head chamber 120 of the present embodiment, since prevention of transmission of gas through the seams 103 between the airbag panels is achieved by the gas sealing agent, and prevention of transmission of gas through the airbag panels themselves is achieved by the coating layer, such a cooperative effect provides improvement of the air-tightness with higher effectiveness. The gas sealing agent and the coating layer constitute the "gas sealing agent" in the present invention.

The airbag 102 is stored in the airbag apparatus 101 built in the seat side portion in a folded state in a predetermined folding mode such as accordion state in advance.

In the breast chamber 110, stitching is done at a seam 104 so that a thickness of the chamber in the lateral direction at the time of deployment and inflation becomes the desired thickness (a chamber thickness d1 described later). In other words, in the breast chamber 110, the thickness of the chamber in the lateral direction at the time of deployment and inflation is adjusted by stitching at the seam 104 in which the wall surfaces of the opposing airbag panels are directly stitched together, and the seam 104 corresponds to the "seam" in the present invention. The lateral direction of the breast chamber 110 corresponds to a normal vector direction of a passenger protection surface of the breast chamber 110 which faces the breast portion of the vehicle passenger in the deployed and inflated state.

The airbag panel of the breast chamber 110 is formed with a vent hole 112 having a function to allow to discharge the gas in the breast chamber 110 out from the chamber. The vent hole 112 corresponds to the "vent hole" in the present invention. The diameter (size) of the vent hole 112 is set as needed based on a desired mode of deployment and inflation of the breast chamber (such as a period of gas retention or a gas pressure) 110.

The head chamber 120 is provided with a first compartment 121, a second compartment 122, a third compartment 123 in sequence from an entrance side.

The first compartment 121 constitutes a gas flow path area for introducing gas into the head chamber 120. The first compartment 121 is disposed below the second compartment 122 and the third compartment 123 at the time of deployment and inflation, and also formed into a substantially cylindrical-shape extending longitudinally in the vertical direction. The first compartment 121 in this structure functions to support the second compartment 122 and the third compartment 123 firmly from below, whereby an upright posture of the entire head chamber 120 is ensured at the time of deployment and inflation.

The second compartment 122 and the third compartment 123 are deployed and inflated by gas introduced through the first compartment 121, and constitute a protection area for protecting the head portion of the vehicle passenger. The second compartment 122 and the third compartment 123 constitute a portion for achieving the substantial protective function for the head portion of the vehicle passenger right after occurrence of accident. There may be a case where either one of the second compartment 122 or the third compartment 123 achieves the substantial protective function for the head portion or a case where both of the second compartment 122 and the third compartment 123 achieve the substantial protective function for the head portion depending on the seated position of the vehicle passenger or the state of collision (oblique collision or the like). The second compartment 122 constitutes a space area lager than the third compartment 123 in capacity, and the second compartment 122 is adapted to be increased in pressure earlier than in the third compartment 123 since gas for deployment and inflation passed through the first compartment 121 flows directly into the second compartment 122. In other words, the period required for increasing an internal pressure to a predetermined high pressure is shorter for the second compartment 122 than for the third compartment 123, and hence a building-up capability is enhanced in the second compartment 122. The second compartment 122 and the third compartment 123 are partitioned from each other by stitching the airbag panels together at a portion corresponding to the head chamber 120 at a seam 105. The head chamber 120 is adapted in such a manner that the chamber thickness in the lateral direction at a portion corresponding to the second compartment 122 and the third compartment 123 at the time of deployment and inflation becomes a desired thickness (chamber thickness d2 described later). The lateral direction of the head chamber 120 corresponds to a normal vector direction of a passenger protection surface of the head chamber 120 which faces the head portion of the vehicle passenger in the deployed and inflated state.

A strap 106 as a connecting band is connected to the airbag 102 having the structure as described above, and the strap 106 inserts a supporting rod 140 extending in the vertical direction of the vehicle thereinto. Accordingly, the airbag 102 and the supporting rod 140 are connected via the strap 106. The supporting rod 140 allows movement the airbag 102 connected to the strap 106 in the vertical direction, and functions as a guide member which guides the airbag 102 upward at the time of deployment and inflation. The supporting rod 140 is fixed to a frame portion of a vehicle seat or a bolt portion of a retainer.

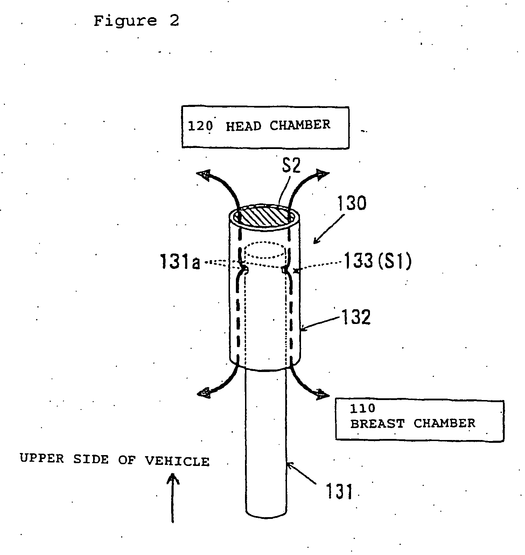

The gas supply device 130 has a structure which can generate gas for deployment and inflation and supply the gas to the inner space of the airbag 102. The gas supply device 130 is arranged in the airbag 102 longitudinally in the vertical direction near an entrance. The gas supply device 130 corresponds to "gas supply means" in the present invention. A perspective view of the structure of the gas supply device 130 is shown in Fig. 2.

As shown in Fig. 2, the gas supply device 130 includes an inflator 131 of a single structure as a gas generating source for deployment and inflation and a cylindrical sleeve 132, and the sleeve 132 is arranged so as to cover a gas discharge portion 131a of the inflator 131. Accordingly, an inner peripheral portion of the sleeve 132 and an outer peripheral portion of the inflator 131 form a space 133 extending in the vertical direction therebetween. In this arrangement, gas of a uniform pressure discharged sideward from the gas discharge portion (discharge hole) 131a of the inflator 131 is distributed in parallel into the head chamber 120 on the upper side and the breast chamber 110 on the downstream side. At this time, the gas discharged from the gas discharge portion 131a hits against the inner peripheral surface of the sleeve 132, then partly flows upward in the space 133, and flows into the head chamber 120 side. On the other hand, the other gas flows downward in the space 133 and flows into the breast chamber 110 side. At this time, the sleeve 132 prevents generation of uneven gas flow by being affected by the deployment conditions of the airbag 102 (a folded state of the airbag, a mode of deployment of the cover, and so on) by forming the space 133 for allowing smooth gas flow between the sleeve 132 and the outer periphery of the inflator 131, thereby functioning to smoothen gas supply to the respective chambers.

In the present embodiment, a cross sectional,area S2 of a flow path through which the gas moves toward the head chamber 120 side may be formed to be larger than a cross sectional area (a cross sectional area S1 of the space 133) of a flow path through which the gas moves toward the breast chamber 110 side. Accordingly, resistance of the flow path of the gas directed to the head chamber 120 can be reduced, whereby a quantity of gas flow flowing into the head chamber 120 side becomes larger than the quantity of gas flow flowing into the breast chamber 110 side. In this manner, the cross sectional area of the flow path through which the gas moves to the respective chambers can be set as desired by the sleeve 132, and hence the sleeve 132 functions to adjust the quantity of gas flow flowing into the respective chambers.

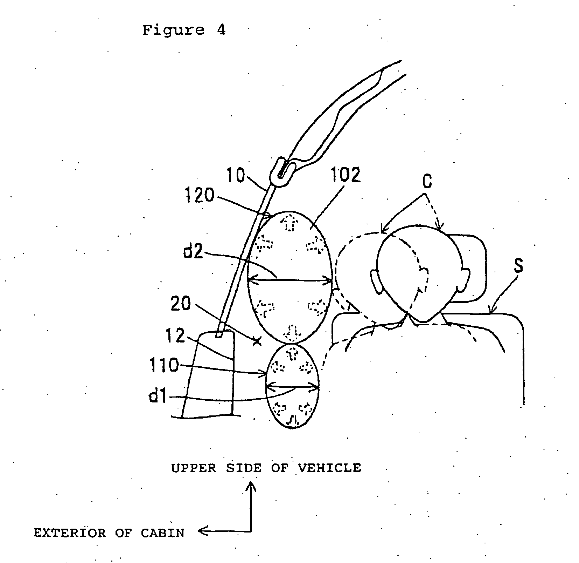

A state in which the airbag 102 described above is deployed and inflated in case of vehicle accident, such as side collision or sideward rolling of the vehicle is shown in Fig. 3 and Fig. 4. Fig. 3 is a side view of the airbag 102 deployed and inflated for a vehicle passenger C seated on the driver's seat S, and Fig. 4 is a front view of the airbag 102 deployed and inflated for the vehicle passenger C seated on the driver's seat S.

When the side collision or sideward rolling of the vehicle occurs, the gas supply device 130 is activated, and gas for deployment and inflation is generated from the inflator 131. The gas is distributed to the head chamber 120 and the breast chamber 110 by the distribution effect of the sleeve 132 and supplied in parallel. In other words, the gas discharged from the gas discharge portion 131a of the inflator 131 is supplied to the head chamber 120 and the breast chamber 110 through separate routes. In association with it, the airbag 102 stored in the airbag apparatus 101 built in the driver's seat S in advance starts deployment and inflation action (action to be inflated while being deployed), and is deployed and inflated upward. At this time, the breast chamber 110 and the head chamber 120 of the airbag 102 are deployed and inflated respectively by gas flowing therein and the pressure therein is increased. At this time, at least when the passenger is constrained by the airbag 102, the airbag is inflated in such a manner that the chamber thickness d2 of the head chamber 120 in the lateral direction becomes larger than the chamber thickness d1 of the breast chamber 110 in the lateral direction.

The pressure in the breast chamber 110 is substantially uniformly increased in the entire chamber in a process of deployment and inflation. After the breast chamber 110 is completed the deployment and inflation, the thickness of the breast chamber 110 in the lateral direction in Fig. 4 reaches the thickness d1 at least at the time to constrain the passenger, and then the gas pressure in the breast chamber 110 is lowered by discharging the gas to the outside of the breast chamber 110 via the vent hole 112.

On the other hand, the head chamber 120 is deployed and inflated and increased in pressure from the first compartment 121 disposed at the entrance of the chamber, the second compartment 122 and third compartment 123 disposed on the upstream side thereof in sequence in the process of deployment and inflation thereof. At this time, the first compartment 121 is inflated into a substantially cylindrical shape extending longitudinally in the vertical direction, and hence supports the second compartment 122 and the third compartment 123 firmly from below. Therefore, the upright posture of the entire head chamber 120 in the vertical direction is ensured. Then, the thickness of the head chamber 120 in the lateral direction in Fig. 4 with its deployment and inflation completed becomes the thickness d2 (>d1) at least when constraining the passenger. Then, since the period required for achieving the predetermined high pressure in the second compartment 122 is shorter than in the third compartment 123, the building-up capability of the second compartment 122 which achieves substantial protective functions of the head portion of the vehicle passenger C right after occurrence of accident is enhanced, and hence the second compartment 122 can be deployed and inflated quickly.

In this manner, the airbag 102 is deployed and inflated in the passenger protection area 20 on the side of the vehicle passenger C so as to protect at least the head portion and the breast portion of the vehicle passenger C as shown in Fig. 3 and Fig. 4. The passenger protection area 20 is a protection area defined between the vehicle side wall portion composed of a side window 10 or a door trim 12 or the like and the vehicle passenger C, and corresponds to the "passenger protection area" in the present invention.

Then, the vehicle passenger C crashed into the airbag 102 with its deployment and inflation completed is constrained by the airbag 102. At this time, after the vehicle passenger C has crashed into the airbag 102 with its deployment and inflation completed, the head chamber 120 is always maintained at a high-pressure state, which is higher than the pressure in the breast chamber 110. Also, the period in which the head chamber 120 is maintained in the high pressure state becomes longer than the period in which the breast chamber 110 is. This is because of the gas discharging effect of the vent hole 112 in the breast chamber 110 and the gas sealing effect of the gas sealing agent and the coating layer in the head chamber 120, since the entire head chamber 120 is partitioned in a state in which the air-tightness is enhanced by the gas sealing agent and the coating layer, and in addition, while the breast chamber 110 has the vent hole 112, the head chamber 120 does not have such a vent hole.

In the present embodiment, since the quantity of gas flow flowing into the head chamber 120 side is larger than the quantity of gas flow flowing into the breast chamber 110 side, at least upon completion of the deployment and inflation of the airbag 102, the pressure in the head chamber 120 is increased higher than the pressure in the breast chamber 110. In other words, in the present embodiment, the sleeve 132 functions to prevent uneven generation of gas flow and smoothen the gas supply to the respective chambers, and also functions to distribute the gas for deployment and inflation more to the head chamber 120 side than to the breast chamber 110 side, so as to increase the pressure in the head chamber 120 to the higher level than that in the breast chamber 110.

As described above, according to the present embodiment, with a configuration in which the thickness of the head chamber 120 in the lateral direction of the deployed and inflated airbag 102 becomes larger than the thickness of the breast chamber 110 in the lateral direction in case of occurrence of vehicle accident, the airbag 102 can be deployed and inflated in the optimal mode for the head portion and the breast portion of the vehicle passenger C for constraining the vehicle passenger 102. Accordingly, protection of at least the head portion and the breast portion of the vehicle passenger C is achieved.

According to the present embodiment, since the thickness of the chambers in the lateral direction at the time of deployment and inflation can be adjusted by the seam in which the wall surfaces of the opposing airbag panels are stitched together, the adjustment structure of the chamber thickness can be simplified.

According to the present embodiment, by enhancing the air-tightness specifically in the head chamber 120 out of the respective portions of the airbag 102 by the use of the gas sealing agent and the coating layer, the high-pressure state in the head chamber 120 after deployment and inflation can be maintained, whereby protection of, particularly, the head portion of the vehicle passenger is ensured.

According to the present embodiment, the vent hole 112 can prevent the internal pressure in the breast chamber 110 from excessively increased or the high-pressure state in the breast chamber 110 from being excessively and continuously maintained, whereby protection of, particularly, the breast portion of the vehicle passenger is ensured.

The present invention is not limited to the above-described embodiment, and various applications or modifications may be made. For example, respective modes shown below in which the above described embodiment is applied may be implemented.

The above-described embodiment describes the structure of the breast chamber 110 of the airbag 102 in which the chamber thickness in the lateral direction at the time of deployment and inflation is adjusted by stitching at the seam 104 in which the wall surfaces of the opposing airbag panels are directly stitched together. However, the present invention may employ another structure as the structure for adjusting the thickness of the chambers. For example, the invention may be configured in such a manner that the wall surfaces of the opposing airbag panels are joined via another member (for example, a belt-shaped or cord shaped member) and the thickness of the chambers in the lateral direction at the time of deployment and inflation is adjusted by adjusting the length of the member.

The above-described embodiment describes the structure in which the chamber thickness in the lateral direction at the time of deployment and inflation is adjusted by stitching at the seam 104 in the breast chamber 110. However, in the present invention, it is only necessary that the airbag is configured in such a manner that the thickness of the head chamber 120 in the lateral direction is relatively larger than the thickness of the breast chamber 110 in the lateral direction at the time of deployment and inflation, and the positions to form the seams such as the seam 104 are not limited to the breast chamber 110. For example, the present invention includes the mode in which the thickness of the chambers is relatively adjusted by stitching at the seam in either one of the breast chamber 110 or the head chamber 120, or the mode in which the thickness of the chambers is relatively adjusted by stitching at the seam in both of the breast chamber 110 and the head chamber 120.

The above described embodimentdescribes the gas sealing agent and the coating layer for restricting the gas in the head chamber 120 from flowing outside of the chamber are applied on the inner wall surface of the airbag panel of the airbag 102, and the vent hole 112 for allowing the gas in the breast chamber 110 from to be discharged out from the chamber is provided. However, in the present invention, the gas sealing agent, the coating layer and the vent hole 112 may be omitted as needed. In the present invention, regarding to the application of the gas sealing agent in the head chamber 120, at least one of the gas sealing agent applied to the seam 103 between the airbag panels and the coating layer applied on the entire surface of the inner wall surface of the airbag panels may be omitted as needed.

Also, in the above-described embodiment the airbag apparatus 101 built in the passenger seat has been described. However, the airbag apparatus of the present invention may have a structure which is built in a portion other than the passenger seat, for example, the trim of the vehicle body, a pillar, or a roof rail.

In the above described embodiment, the airbag apparatus 101 which is worn by the vehicle passenger to be seated on the driver's seat of the vehicle. However, the present invention may be applied to a structure of the airbag apparatus which is worn by the vehicle passenger seated on other than the driver's seat such as a passenger seat or a rear seat may be applied.

## Claims

1. An airbag apparatus comprising: an airbag (102) to be deployed and inflated in a passenger protection area (20) between a vehicle passenger and a vehicle side wall portion in case of vehicle accident, said airbag includes a head chamber (120) for protecting a head of the vehicle passenger and a breast chamber (110) for protecting a breast of the vehicle passenger, and a thickness of the head chamber in the lateral direction becomes larger than the thickness of the breast chamber in the lateral direction at the time of deployment and inflation,
and a gas supply means (130) for supplying gas for deployment and inflation to the airbag,
**characterized in that** said airbag comprises a cylindrical sleeve (132) arranged to cover a gas discharge portion (131a) of the inflator (131) for distributing gas of a uniform pressure discharged from the gas supply means into the head chamber and the breast chamber, and for adjusting the quantity of gas flowing into the respective chambers so that the quantity of gas flowing into the head chamber becomes larger than the quantity of gas flowing into the breast chamber.

2. The airbag apparatus according to Claim 1, wherein the airbag comprises a seam (104) in which wall surfaces of opposing airbag panels are directly stitched together in at least one of the head chamber and the breast chamber, and the thickness of the chambers in the lateral direction is adjusted by the stitching at the seam at the time of deployment and inflation.

3. The airbag apparatus according to Claim 1 or 2, wherein the airbag has a configuration in which a gas sealing agent is applied on an inner wall surface of the airbag panel for restricting gas in the head chamber from flowing out from the chamber.

4. The airbag apparatus according to any one of Claim 1 to 3, wherein the airbag is provided with a vent hole (112) formed on an airbag panel for allowing gas in the breast chamber to be discharged from the chamber on the airbag panel.

5. An airbag apparatus according to any one of claims 1 to 4, wherein the gas supply means (130) is located at a boundary between a first compartment (121) and the breast chamber (110) and supplies more gas into the head chamber (120) than into the breast chamber.

6. An airbag apparatus according to any one of claims 1 to 5, wherein said gas supply means comprises an inflator (131) having an outer peripheral portion and a gas discharge portion (131a) formed at the outer peripheral portion, and the sleeve (132) covering the gas discharge portion with a space (133) therebetween so that the gas flows in two opposite directions along the sleeve through the space between the sleeve and the inflator.

7. An airbag apparatus according to any one of claims 1 to 6, wherein the airbag has a gas sealing agent applied only to an inner wall surface of the head chamber for restricting gas release from the head chamber.

## Patentansprüche

1. Airbaganordnung mit: einem Airbag (102), der im Falle eines Fahrzeugunfalls in einem Insassenschutzbereich (20) zwischen einem Fahrzeugpassagier und einem Fahrzeugseitenwandabschnitt entfaltbar und aufblasbar ist, wobei der Airbag eine Kopfkammer (120) zum Schutz des Kopfes des Fahrzeugpassagiers und eine Brustkammer (110) zum Schutz der Brust des Fahrzeugpassagiers aufweist und beim Entfalten und Aufblasen die Dicke der Kopfkammer in Seitenrichtung größer als die Dicke der Brustkammer in Seitenrichtung wird, sowie mit einer Gasversorgungseinrichtung (130) zum Zuführen von Gas zum Airbag zum Entfalten und Aufblasen,
**dadurch gekennzeichnet, dass** der Airbag eine Zylinderhülse (132) aufweist, die zum Abdecken eines Gasabgabeabschnitts (131a) der Aufblaseinrichtung (131) angeordnet ist zum Verteilen von Gas mit gleichem Druck aus der Gaszuführeinrichtung in die Kopfkammer und die Brustkammer sowie zum Einstellen der in die entsprechenden Kammern strömenden Gasmenge, dass die in die Kopfkammer strömende Gasmenge größer wird als die in die Brustkammer strömende Gasmenge.

2. Airbaganordnung nach Anspruch 1, wobei der Airbag eine Naht (104) aufweist, wobei Wandflächen gegenüberliegender Airbagpaneele direkt miteinander in der Kopfkammer und/oder der Brustkammer vernäht sind und wobei die Dicke der Kammern in seitlicher Richtung durch das Vernähen an der Naht beim Entfalten und Aufblasen eingestellt wird.

3. Airbaganordnung nach Anspruch 1 oder 2, wobei der Airbag so konfiguriert ist, dass an einer Innenwandfläche des Airbagpaneels ein Gasabdichtmittel aufgebracht ist, um das Ausströmen von Gas aus der Kopfkammer zu begrenzen.

4. Airbaganordnung nach einem der Ansprüche 1 bis 3, wobei der Airbag ein an einem Airbagpaneel ausgebildetes Entlüftungsloch (112) aufweist, um die Abgabe von Gas in der Brustkammer aus der Kammer an dem Airbagpaneel zu ermöglichen.

5. Airbaganordnung nach einem der Ansprüche 1 bis 4, wobei die Gaszuführeinrichtung (130) an einer Grenze zwischen einer ersten Kammer (121) und der Brustkammer (110) angeordnet ist und mehr Gas in die Kopfkammer (120) als in die Brustkammer einleitet.

6. Airbaganordnung nach einem der Ansprüche 1 bis 5, wobei die Gaszuführeinrichtung eine Aufblaseinrichtung (131) aufweist, die einen äußeren Umfangsabschnitt und einen Gasabgabeabschnitt (131a) aufweist, der am äußeren Umfangsabschnitt ausgebildet ist, und wobei die Hülse (132) den Gasabgabeabschnitt abdeckt und dazwischen einen Raum (133) bildet, so dass das Gas in zwei entgegengesetzte Richtungen entlang der Hülse durch den Raum zwischen der Hülse und der Aufblaseinrichtung strömt.

7. Airbaganordnung nach einem der Ansprüche 1 bis 6, wobei der Airbag ein Gäsabdichtmittel aufweist, das nur an einer Innenwandfläche der Kopfkammer vorgesehen ist, um die Gasabgabe aus der Kopfkammer zu begrenzen.

## Revendications

1. Dispositif d'airbag comprenant : un airbag (102) devant être déployé et gonflé dans une zone de protection de passager (20) entre un passager du véhicule et une partie de paroi latérale du véhicule en cas d'accident du véhicule,
ledit airbag comporte une chambre pour la tête (120) destinée à protéger la tête d'un passager du véhicule et une chambre pour la poitrine (110) destinée à protéger la poitrine d'un passager du véhicule, et une épaisseur de la chambre pour la tête dans la direction latérale devient supérieure à l'épaisseur de la chambre pour la poitrine dans la direction latérale au moment du déploiement et du gonflement, et des moyens d'amenée de gaz (130) destinés à amener le gaz pour le déploiement et le gonflement de l'airbag,
**caractérisé en ce que** ledit airbag comprend un manchon cylindrique (132) agencé pour recouvrir une partie d'évacuation de gaz (131a) du gonfleur (131) destiné à distribuer une pression uniforme de gaz évacué des moyens d'amenée de gaz à l'intérieur de la chambre pour la tête et de la chambre pour la poitrine, et à régler la quantité de gaz circulant à l'intérieur des chambres respectives de sorte que la quantité de gaz circulant à l'intérieur de la chambre pour la tête devient supérieure à la quantité de gaz circulant à l'intérieur de la chambre pour la poitrine.

2. Dispositif d'airbag selon la revendication 1, dans lequel l'airbag comprend une couture (104) dans laquelle les surfaces de paroi de panneaux d'airbag opposés sont directement piquées les unes aux autres dans au moins une parmi la chambre pour la tête et la chambre pour la poitrine, et l'épaisseur des chambres dans la direction latérale est réglée par la piqûre au niveau de la couture au moment du déploiement et du gonflage.

3. Dispositif d'airbag selon la revendication 1 ou 2, dans lequel l'airbag présente une configuration dans laquelle un agent d'étanchéité au gaz est appliqué sur une surface de paroi interne du panneau d'airbag pour empêcher le gaz dans la chambre pour la tête de circuler à l'extérieur de la chambre.

4. Dispositif d'airbag selon l'une quelconque des revendications 1 à 3, dans lequel l'airbag est pourvu d'un trou de ventilation (112) formé sur un panneau d'airbag pour permettre au gaz dans la chambre pour la poitrine d'être évacué de la chambre sur le panneau d'airbag.

5. Dispositif d'airbag selon l'une quelconque des revendications 1 à 4, dans lequel les moyens d'amenée de gaz (130) sont positionnés au niveau d'une limite entre un premier compartiment (121) et la chambre pour la poitrine (110) et amènent plus de gaz à l'intérieur de la chambre pour la tête (120) qu'à l'intérieur de la chambre pour la poitrine.

6. Dispositif d'airbag selon l'une quelconque des revendications 1 à 5, dans lequel lesdits moyens d'amenée de gaz comprennent un gonfleur (131) présentant une partie périphérique externe et une partie d'évacuation de gaz (131a) formée au niveau de la partie périphérique externe, et le manchon (132) recouvrant la partie d'évacuation de gaz avec un espace (133) entre ceux-ci de sorte que le gaz circule dans deux directions opposées le long du manchon à travers l'espace entre le manchon et le gonfleur.

7. Dispositif d'airbag selon l'une quelconque des revendications 1 à 6, dans lequel l'airbag présente un agent d'étanchéité au gaz appliqué uniquement sur une surface de paroi interne de la chambre pour la tête pour éviter que le gaz soit libéré de la chambre pour la tête.
